# EUROPÄISCHE PATENTSCHRIFT

(11) **EP 0 630 089 B1**
(45) Veröffentlichungstag und Bekanntmachung des Hinweises auf die Patenterteilung: **15.01.1997**
(21) Anmeldenummer: 94109229.8
(22) Anmeldetag: 15.06.1994
(51) Int. Cl.: H02G 3/04, F16L 9/18, B29C 47/06

(54) **Verfahren zur Herstellung eines Kabelführungsrohraggregates und Vorrichtung zur Durchführung des Verfahrens**
Process for producing a cable tubings assembly and device for performing the process
Procédé de fabrication d'un ensemble de conduits tubulaires pour câbles et dispositif de réalisation du procédé

(30) Priorität: 16.06.1993 DE 4319697
(43) Veröffentlichungstag der Anmeldung: 21.12.1994
(73) Patentinhaber: Dipl.-Ing. Dr. Ernst Vogelsang GmbH & Co. KG, D-45699 Herten (DE)
(72) Erfinder: Vogelsang,Horst, D-45699 Herten (DE)
(74) Vertreter: Andrejewski, Walter, Dr.

(56) Entgegenhaltungen:
- EP-A- 0 244 154
- EP-A- 0 477 484
- DE-A- 2 234 386
- DE-U- 9 303 277

## Beschreibung

Die Erfindung betrifft ein Verfahren zur Herstellung eines Kabelführungsrohraggregates aus einer Mehrzahl von nebeneinanderliegenden Kabelführungsrohren, die durch angeformte Verbindungsstege vereinigt sind, durch Strangpressen eines aus einem Extruder austretenden Gesamtmengenstromes aus thermoplastifiziertem Kunststoff mit Hilfe eines Strangpreßwerkzeuges mit kabelführungsrohrformenden Strömungskanälen sowie verbindungsstegformenden Schlitzen. Die Erfindung betrifft fernerhin ein solches Verfahren, bei dem zusätzlich Rohrbündelstabilisierungsprofile angeformt werden und das Strangpreßwerkzeug zusätzlich Rohrbündelstabilisierungsprofile formende Profilkanäle aufweist. Die Erfindung betrifft fernerhin eine Vorrichtung zur Durchführung eines solchen Verfahrens. - Der Ausdruck Kabelführungsrohraggregate bezeichnet eine Mehrzahl von Kabelführungsrohren, die zumeist als ebenes Aggregat stranggepreßt werden, zum Zwecke der Verlegung jedoch zu einem Kabelführungsrohrbündel zusammengelegt werden können. Solche Kabelführungsrohraggregate sind in verschiedenen Ausführungsformen bekannt (vgl. EP 0 477 484 A1).

Bei dem bekannten Verfahren, von dem die Erfindung ausgeht, wird der Gesamtmengenstrom den einzelnen Strömungskanälen, aber auch den Schlitzen zugeführt. Eine Abzweigung von separaten Teilmengenströmen, die separat steuerbar und/oder regelbar sind und aus denen die Verbindungsstege ausgeformt werden, findet nicht statt. Das gilt auch für die Ausführungsform der Rohrbündelstabilisierungsprofile, wenn solche zusätzlich vorgesehen sind. Rohrbündelstabilisierungsprofile bezeichnet Profilausbildungen, die sicherstellen, daß das Kabelführungsrohrbündel, zusammengelegt als Bündel, stabil und nichtsdestoweniger auch bogenförmig verlegbar ist. Die Kabelführungsrohre und/oder die Rohrbündelstabilisierungsprofile stützen sich im Bündel unter Zwischenschaltung eines definierten Spiels für das Auftrommeln und für eine bogenförmige Führung bei der Verlegung gegeneinander ab.

Der Erfindung liegt das technische Problem zugrunde, bei einem Verfahren zur Herstellung eines Kabelführungsrohraggregates sicherzustellen, daß die Verbindungsstege so ausgeformt werden, wie es der konstruktiven Vorgabe entspricht. Das gilt auch für die Ausformung von Rohrbündelstabilisierungsprofilen, wenn solche vorgesehen sind. Der Erfindung liegt fernerhin das technische Problem zugrunde, eine Vorrichtung anzugeben, mit der die entsprechenden verfahrenstechnischen Maßnahmen auf einfache Weise verwirklicht werden können.

Zur Lösung dieses technischen Problems ist Gegenstand der Erfindung ein Verfahren zur Herstellung eines Kabelführungsrohraggregates aus einer Mehrzahl von Kabelführungsrohren, die durch angeformte Verbindungsstege vereinigt sind, durch Strangpressen eines aus einem Extruder austretenden Gesamtmengenstromes aus thermoplastifiziertem Kunststoff mit Hilfe eines Strangpreßwerkzeuges mit kabelführungsrohrformenden Strömungskanälen sowie verbindungsstegformenden Schlitzen, wobei die folgenden Merkmale verwirklicht sind:
a) Der Gesamtmengenstrom wird in den einzelnen Strömungskanälen zugeordnete Mengenströme aufgeteilt und diese werden den Werkzeugköpfen zugeführt,
b) aus den einzelnen Mengenströmen werden Teilmengenströme abgezweigt, die über separate Strömungswege im Strangpreßwerkzeug den Schlitzen zugeführt werden,
wobei die einzelnen Mengenströme und die zugeordneten Teilmengenströme im Bereich des Austrittes des Strangpreßwerkzeuges vereinigt werden. - Der Gesamtmengenstrom kann von einem Extruder oder von mehreren Extrudern erzeugt werden.

Insbesondere können an die Kabelführungsrohre Rohrbündelstabilisierungsprofile angeformt werden und dazu aus den Mengenströmen weitere Teilmengenströme abgezweigt werden, die über weitere separate Strömungswege im Strangpreßwerkzeug den Profilkanälen zugeführt werden.

Auch dabei kann der Gesamtmengenstrom von einem oder von mehreren Extrudern erzeugt werden.

Bei beiden Verfahrensweisen werden nach bevorzugter Ausführungsform der Erfindung die Mengenströme und die Teilmengenströme unabhängig voneinander gesteuert und/oder geregelt.

Nach der Lehre der Erfindung können Kabelführungsrohraggregate hergestellt werden, deren Kabelführungsrohre glatte Innenwände aufweisen. Es besteht aber auch die Möglichkeit, nach dem beschriebenen Verfahren Kabelführungsrohraggregate herzustellen, deren Kabelführungsrohre rohrinnenwandseitig schraubenwendelförmig, alternierend schraubenwendelförmig oder wellenförmig verlaufende Gleitrippen aufweisen, die von einem entsprechend angetriebenen, gleitrippenformenden Formwerkzeug in an sich bekannter Weise erzeugt werden. Hier lehrt die Erfindung, daß die Mengenströme und die Teilmengenströme am Ort des gleitrippenformenden Formwerkzeuges zusammengeführt werden.

Die durch die Erfindung erreichten Vorteile sind darin zu sehen, daß erfindungsgemäß die Verbindungsstege, denen in den Kabelführungsrohrbündeln, die aus erfindungsgemäß hergestellten Kabelführungsrohraggregaten zusammengelegt werden, große Bedeutung zukommt, sehr genau und nach Maßgabe der konstruktiven Vorgaben ausgeformt werden können. Das gilt auch für die Rohrbündelstabilisierungsprofile, wenn solche auszuformen sind. Von besonderem Vorteil ist die Tatsache, daß die Teilmengenströme so gesteuert und/oder geregelt werden können, daß die Rohrinnenquerschnitte praktisch vollkommen kreisrund sind und keine Einfallsstellen zeigen. Das gilt auch für die Ausführungsform, bei der zusätzlich Gleitrippen in der beschriebenen Weise ausgeformt werden.

Gegenstand der Erfindung ist auch die Vorrichtung, die in den Patentansprüchen 5 bis 8 beansprucht ist.

Die Erfindung insgesamt und insbesondere die Vorrichtung für die Durchführung der erfindungsgemäßen Verfahren werden im folgenden anhand einer lediglich ein Ausführungsbeispiel darstellenden Zeichnung ausführlicher erläutert. Es zeigen
- Fig. 1: einen Schnitt durch ein erfindungsgemäßes Kabelführungsrohrbündel aus Kabelführungsrohren, Verbindungsstegen und Rohrbündelstabilisierungsprofilen,
- Fig. 2: das Kabelführungsrohraggregat, aus dem das Kabelführungsrohrbündel nach Fig. 1 gebildet wurde, im Schnitt,
- Fig. 3: einen Längsschnitt durch eine Vorrichtung für die Durchführung des erfindungsgemäßen Verfahrens in der Ausführungsform für die Herstellung eines Kabelführungsrohraggregates,
- Fig. 4: einen Halbschnitt durch den Gegenstand der Fig. 3 in der Draufsicht,
- Fig. 5: in gegenüber der Fig. 3 wesentlich vergrößertem Maßstab einen Schnitt in Richtung AA durch den Gegenstand der Fig. 3, und
- Fig. 6: die Frontansicht des Gegenstandes der Fig. 3 aus Richtung des Pfeiles B.

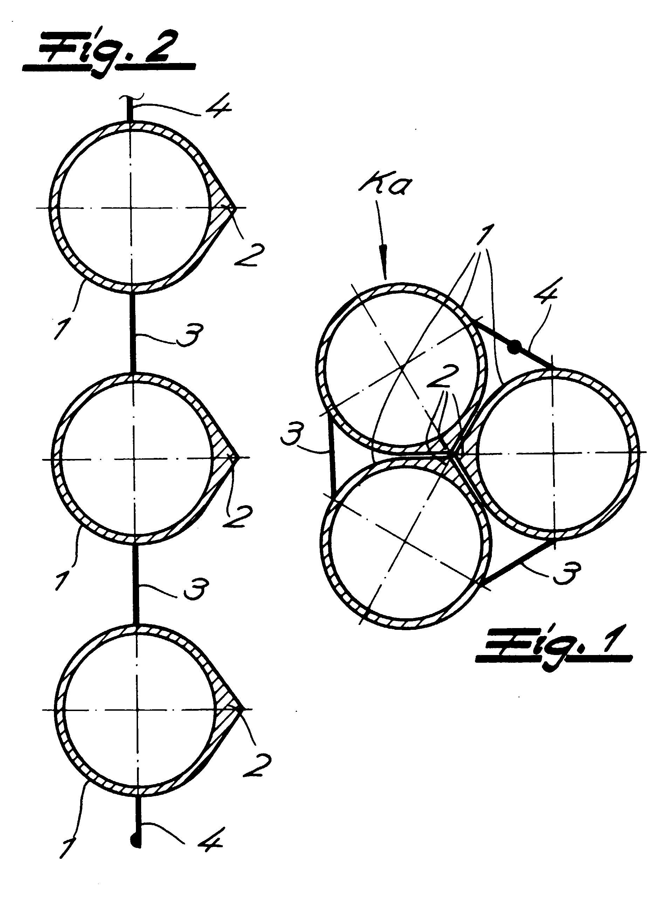

In der Fig. 1 erkennt man ein Kabelführungsrohrbündel Kb mit einzelnen Kabelführungsrohren 1, die mit einem angeformten Rohrbündelstabilisierungsprofil 2 versehen sind. Die einzelnen Kabelführungsrohre 1 sind durch Verbindungsstege 3 vereinigt. Das Kabelführungsrohrbündel Kb ist durch Rohrbündelverschlußlamellen 4 geschlossen. Die Fig. 2 zeigt das Kabelführungsrohraggregat Ka, aus dem das Kabelführungsrohrbündel Kb durch Zusammenlegung geformt wurde.

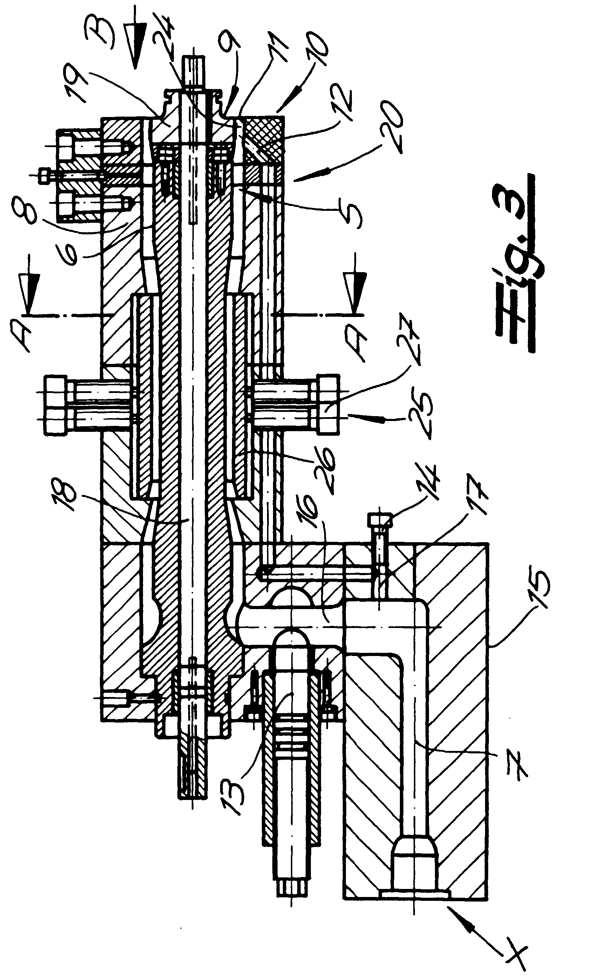

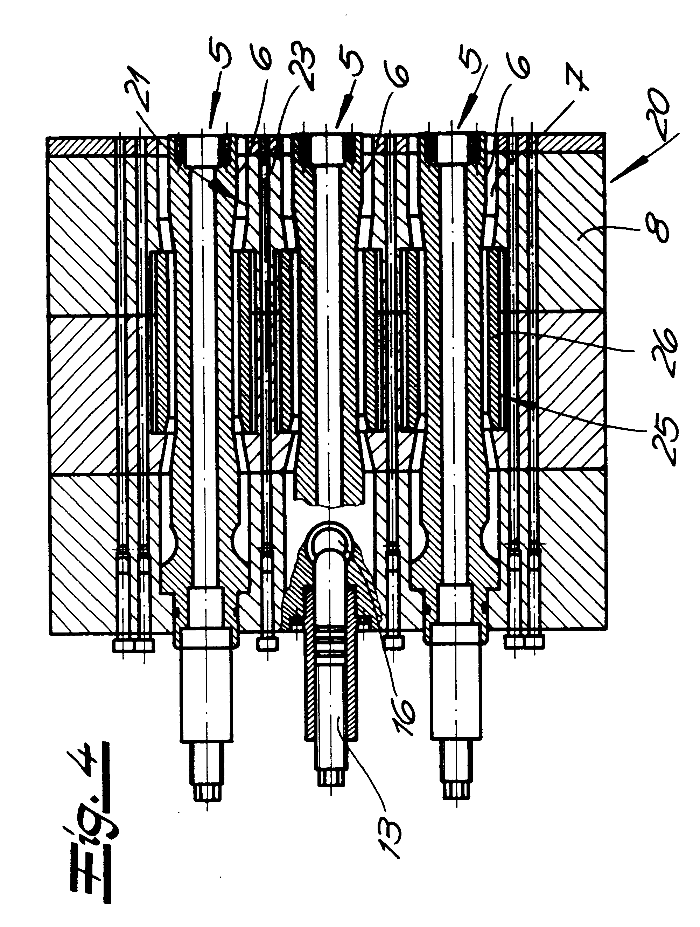

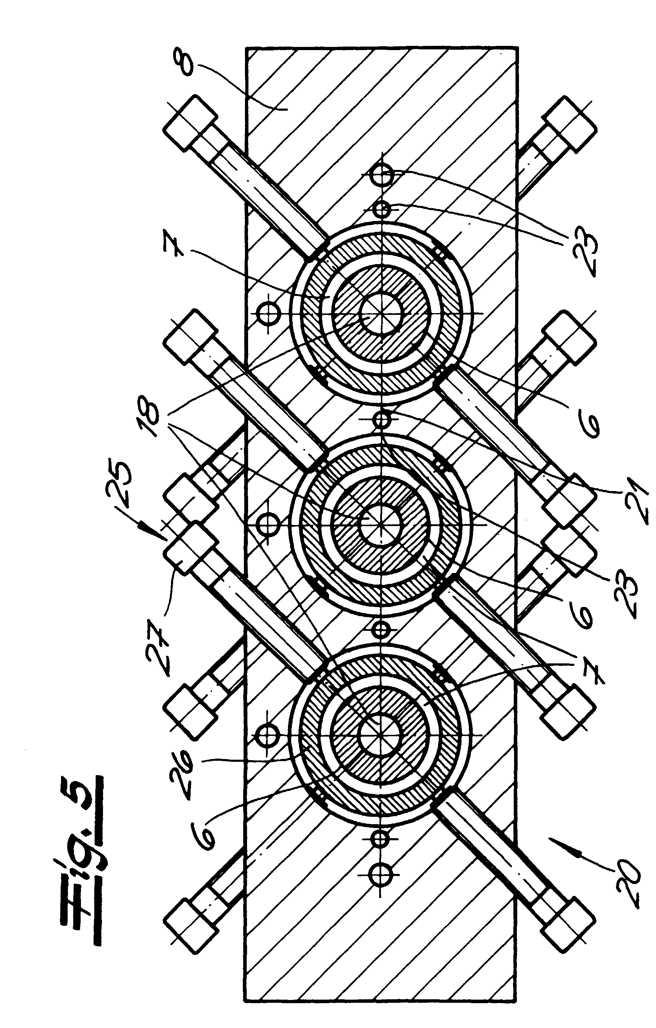

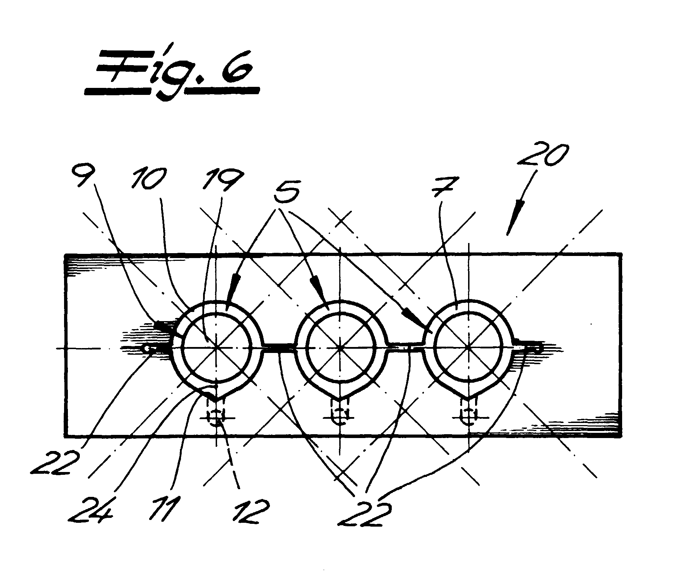

Die in den Fig. 3 bis 6 dargestellte Vorrichtung für die Herstellung eines Kabelführungsrohres 1 bildet einen an einen Extruder anschließbaren Werkzeugkopf 5. Der Extruder wird bei X angeschlossen.

Der Werkzeugkopf 5 besitzt einen zentralen Werkzeugdorn 6 und ein den Werkzeugdorn 6 unter Bildung eines Strömungskanals 7 für den aus einem Gesamtmengenstrom bereits abgezweigten Mengenstrom des thermoplastifizierten Kunststoffes für ein Kabelführungsrohr 1. Der Strömungskanal 7 ist, mit weiteren für das Strangpressen weiterer Kabelführungsrohre 1, untergebracht in dem Werkzeuggehäuse 8. Am Ende des Werkzeugkopfes 5, aus dem das Kabelführungsrohr 1 mit seinem Rohrbündelstabilisierungsprofil 2 austritt, befinden sich ein Innenwerkzeug 9 und ein äußeres Formwerkzeug 10, wobei das äußere Formwerkzeug 10 eine Ausformung 11 für das Rohrbündelstabilisierungsprofil 2 aufweist. Im Werkzeuggehäuse 8 ist ein besonderer Strömungskanal 12 für den Teilmengenstrom für die Bildung des Rohrbündelstabilisierungsprofils 2 angeordnet. Dieser mündet nahe der Ausformung des Formwerkzeuges 10 für das Rohrbündelstabilisierungsprofil 2 in den Strömungskanal 7 für den thermoplastifizierten Kunststoff für das Kabelführungsrohr 1. Die Anordnung ist so getroffen, daß für den Mengenstrom des thermoplastifizierten Kunststoffes für das Kabelführungsrohr 1 sowie für den Teilmengenstrom für die Bildung des Rohrbündelstabilisierungsprofils 2 selbständige Steuer und/oder Regeleinrichtungen 13, 14 angeordnet sind. Im Ausführungsbeispiel und nach bevorzugter Ausführungsform der Erfindung ist die Anordnung so getroffen, daß der Werkzeugkopf 5 eine gegenüber dem Werkzeuggehäuse 8 mit dem zentralen Werkzeugdorn 6 abgewinkelte, im Ausführungsbeispiel um etwa 90° abgewinkelte, Zuführeinrichtung 15 mit Zuführkanal 16 für den thermoplastifizierten Kunststoff zur Herstellung des Kabelführungsrohres 1 aufweist, die, wie bereits erwähnt, an den zugeordneten Extruder anschließbar ist. Von dem Zuführkanal 16 zweigt ein Anschlußkanal 17 zum Strömungskanal 12 für den Teilmengenstrom für die Bildung des Rohrbündelstabilisierungsprofils 2 ab. In der Zuführeinrichtung 15 befinden sich die Steuer- und/oder Regeleinrichtungen 13 bzw. 14 für den Mengenstrom des thermoplastifizierten Kunststoffes für das Kabelführungsrohr 1 sowie für den Teilmengenstrom für die Bildung des Rohrbündelstabilisierungsprofils 2. Man erkennt in dem zentralen Werkzeugdorn 6 eine Welle 18 zum Antrieb eines Innenwerkzeuges 9, welches einen gleitrippenbildenden Kopf 19 aufweist und dazu gleichsinnig oder alternierend rotierend angetrieben ist. Im Ausführungsbeispiel gehört der beschriebene Werkzeugkopf 5 einem Werkzeugblock 20 von funktionsgleichen Werkzeugen an, mit dem ein Kabelführungsrohraggregat Ka herstellbar ist, wobei die Werkzeugköpfe 5 über Abstandswände 21 vereinigt sind und die Abstandswände 21 stegformende Schlitze 22 mit Zuführungskanälen 23 für thermoplastischen Kunststoff für die Ausformung von Verbindungsstegen 3 und/oder Rohrbündelverschlußlamellen 4 zwischen den Kabelführungsrohren des Kabelführungsrohraggregates Ka aufweisen.

Aus der vorstehenden Beschreibung entnimmt man, daß die Vorrichtung für ein Verfahren eingerichtet ist, bei dem thermoplastifizierter Kunststoff, aus dem das Rohrbündelstabilisierungsprofil 2 geformt wird, im Bereich vor dem Formwerkzeug 10 und der Ausformung 11 für das Rohrbündelstabilisierungsprofil 2 in den Strömungskanal 7 eingespritzt sowie mit dem rohrbildenden thermoplastischen Kunststoff vereinigt wird. Dazu wird der thermoplastifizierte Kunststoff für das Rohrbündelstabilisierungsprofil 2 in eine den Strömungskanal erweiternde Kammer 24, an welche die Ausformung 11 für das Rohrbündelstabilisierungsprofil 2 anschließt eingespritzt. Im Ausführungsbeispiel und nach bevorzugter Ausführungsform der Erfindung wird der thermoplastifizierte Kunststoff für das Rohrbündelstabilisierungsprofil 2 aus dem Mengenstrom für das jeweils herzustellende Kabelführungsrohr 1 als Teilmengenstrom abgezweigt.

Von besonderer Bedeutung ist die Ausführungsform, die zusätzlich eine Zentriervorrichtung 25 aufweist, zu der eine Zentrierhülse 26 und Zentrierstelltriebe 27 gehören. Die Zentriervorrichtung 25 schließt an den Eintrittsbereich des Werkzeugkopfes 5 an. Mit ihrer Hilfe sind Innenwand und Außenwand des herzustellenden Kabelführungsrohres 1 zentrierbar. Die Zentriervorrichtung wird dazu von dem Mengenstrom des thermoplastifizierten Kunststoffes für das Kabelführungsrohr 1 durchflossen.

Die beschriebene Vorrichtung läßt aus darstellungstechnischen Gründen lediglich die Maßnahmen erkennen, die für die Ausformung der Rohrbündelstabilisierungsprofile 2 erforderlich sind. Die Maßnahmen für die Ausformung der Verbindungsstege 3 und der Rohrbündelverschlußlamellen 4 sind identisch. Die entsprechenden Kanäle 7, 12, 16, 17 und Steuer- und/oder Regeleinrichtungen liegen jedoch in Ebenen, die zu der Zeichenebene in Fig. 3 senkrecht stehen.

## Patentansprüche

1. Verfahren zur Herstellung eines Kabelführungsrohraggregates aus einer Mehrzahl von nebeneinanderliegenden Kabelführungsrohren (1), die durch angeformte Verbindungsstege (3) vereinigt sind, durch Strangpressen eines aus einem Extruder austretenden Gesamtmengenstromes aus thermoplastifiziertem Kunststoff mit Hilfe eines Strangpreßwerkzeuges mit kabelführungsrohrformenden Strömungskanälen (7) sowie verbindungsstegformenden Schlitzen (22), wobei die folgenden Merkmale verwirklicht sind:
a) Der Gesamtmengenstrom wird in den einzelnen Strömungskanälen (7) zugeordnete Mengenströme aufgeteilt und diese werden den Werkzeugköpfen (5) zugeführt,
b) aus den einzelnen Mengenströmen werden Teilmengenströme abgezweigt, die über separate Strömungswege im Strangpreßwerkzeug den Schlitzen (22) zugeführt werden,
wobei die einzelnen Mengenströme und die zugeordneten Teilmengenströme im Bereich des Austrittes des Strangpreßwerkzeuges vereinigt werden.

2. Verfahren nach Anspruch 1, wobei Rohrbündelstabilisierungsprofile (2) angeformt werden und dazu aus den Mengenströmen weitere Teilmengenströme abgezweigt werden, die über weitere separate Strömungskanäle (12) im Strangpreßwerkzeug zugeordneten Ausnehmungen (11) für die Bildung der Rohrstabilisierungsprofile (2) den Profilkanälen zugeführt werden.

3. Verfahren nach einem der Ansprüche 1 oder 2, wobei die Mengenströme und die Teilmengenströme unabhängig voneinander gesteuert und/oder geregelt werden.

4. Verfahren nach einem der Ansprüche 1 bis 3 in der Ausführungsform für die Herstellung eines Kabelführungsrohraggregates, dessen Kabelführungsrohre (1) rohrinnenwandseitig schraubenwendelförmig, alternierend schraubenwendelförmig oder wellenförmig verlaufende Gleitrippen aufweisen, die von einem entsprechend angetriebenen, gleitrippenformenden Innenwerkzeug (9, 19) erzeugt werden, wobei die Mengenströme und die Teilmengenströme am Ort der gleitrippenformenden Innenwerkzeuge (9, 19) zusammengeführt werden.

5. Vorrichtung zur Durchführung des Verfahrens nach einem der Ansprüche 1 bis 4, - mit an einem Extruder anschließbaren Werkzeugkopf (5), wobei die Kombination der folgenden Merkmale verwirklicht ist:
a) Der Werkzeugkopf (5) besitzt für jedes Kabelführungsrohr einen zentralen Werkzeugdorn (6) und ein den Werkzeugdorn (6) unter Bildung eines Strömungskanals (7) für den Mengenstrom des thermoplastifizierten Kunststoffes für das Kabelführungsrohr umgebendes Werkzeuggehäuse (8),
b) am Ende des Werkzeugkopfes (5), aus dem die Kabelführungsrohre (1) mit den angeschlossenen Verbindungsstegen (3) bzw. dem angeschlossenen Rohrbündelstabilisierungsprofil (2) austreten, befinden sich Formwerkzeuge (10), die eine Ausformung (11) für das Rohrbündelstabilisierungsprofil (2) bzw. die Bildung des Verbindungssteges (3) aufweisen,
c) im Werkzeuggehäuse (8) ist für jedes Kabelführungsrohr (1) ein besonderer Strömungskanal (12) für den Teilmengenstrom für die Bildung des Rohrbündelstabilierungsprofils (2) bzw. der Verbindungsstege (3) angeordnet, der nahe der Ausformung (11) des Formwerkzeuges (10) für das Rohrbündelstabilisierungsprofil (2) bzw. den Verbindungsstegen (3) in den Strömungskanal (7) für den thermoplastifizierten Kunststoff für das Kabelführungsrohr (1) einmündet,
wobei für den Mengenstrom des thermoplastifizierten Kunststoffes für das Kabelführungsrohr (1) sowie für den Teilmengenstrom für die Bildung der Rohrbündelstabilisierungsprofile (2) bzw. der Verbindungsstege (3) selbständige Steuer- und/oder Regeleinrichtungen (13, 14) angeordnet sind.

6. Vorrichtung nach Anspruch 5, wobei an den Eintrittsbereich des Werkzeugkopfes (5) für jedes Kabelführungsrohr (1) eine Vorrichtung (25) für die Zentrierung von Innenwand und Außenwand des herzustellenden Kabelführungsrohres (1) sich anschließt, die der Mengenstrom des thermoplastifizierten Kunststoffes für das Kabelführungsrohr (1) durchströmt.

7. Vorrichtung nach einem der Ansprüche 5 oder 6, wobei der Werkzeugkopf (5) für jedes Kabelführungsrohr eine gegenüber dem Werkzeuggehäuse (8) mit dem zentralen Werkzeugdorn (6) abgewinkelte Zuführeinrichtung (15) mit Zuführkanal (16) für den thermoplastifizierten Kunststoff zur Herstellung des Kabelführungsrohres (1) aufweist, wobei von dem Zuführkanal (16) ein Anschlußkanal (17) zum Strömungskanal (12) für den Teilmengenstrom für die Bildung des Rohrbündelstabilisierungsprofils (2) bzw. der Verbindungsstege (3) abgezweigt ist.

8. Vorrichtung nach Anspruch 7, wobei in der Zuführeinrichtung (15) die Steuer- und/oder Regeleinrichtungen (13 bzw. 14) für den Mengenstrom des thermoplastifizierten Kunststoffes für das Kabelführungsrohr (1) sowie für die Teilmengenströme angeordnet sind.

## Claims

1. A process for manufacturing a cable conduit aggregate comprising a plurality of cable conduits (1) which are disposed side by side and which are joined by integrally formed connecting webs (3), by the extrusion of a total mass flow of thermally plasticised synthetic material emerging from an extruder with the aid of an extrusion die having flow channels (7) which form cable conduits and having slits (22) which form connecting webs, wherein the following features are put into effect:
a) the total mass flow is subdivided into mass flows associated with the individual flow channels (7) and these mass flows are fed to the extrusion die head (5),
b) partial mass flows are branched off from the individual mass flows, and are fed to the slits (22) via separate flow paths in the extrusion die,
wherein the individual mass flows and the associated partial mass flows are combined in the region of the outlet of the extrusion die.

2. A process according to claim 1, wherein tube bundle stabilisation profiles (2) are integrally formed and for this purpose further partial mass flows are branched off from the mass flows, which partial mass flows are fed, via further separate flow channels (12) in the extrusion die, to recesses (11), which are associated with the profile channels, for the formation of the tube stabilisation profiles (2).

3. A process according to either one of claims 1 or 2, wherein the mass flows and the partial mass flows are controlled and/or regulated independently of each other.

4. A process according to any one of claims 1 to 3 in an embodiment for the manufacture of a cable conduit aggregate, the cable conduits (1) of which have sliding ribs on their inner tube walls, which sliding ribs run in the form of helical spirals, alternating helical spirals or in the form of waves, and which are produced by a correspondingly driven inner die (9, 19) which forms sliding ribs, wherein the mass flows and the partial mass flows are brought together at the location of the inner dies (9, 19) which form the sliding ribs.

5. A device for carrying out the process according to any one of claims 1 to 4, - having a die head (5) which can be attached to an extruder, wherein the combination of the following features is put into effect:
a) for each cable conduit, the die head (5) has a central die mandrel (6) and a die housing (8) which surrounds the die mandrel (6) with the formation of a flow channel (7) for the mass flow of the thermally plasticised synthetic material for the cable conduit,
b) shaping dies (10), which comprise a shaped region (11) for the conduit bundle stabilisation profile (2) or for the formation of the connecting web (3), are situated at the end of the die head (5) from which the cable conduits (1) emerge with the attached connecting webs (3) or the attached conduit bundle stabilisation profile (2), respectively,
c) for each cable conduit (1), a separate flow channel (12) is disposed in the die housing (8) for the partial mass flow for the formation of the conduit bundle stabilisation profile (2) or for the connecting webs (3), respectively, which separate flow channel leads into the flow channel (7) for the thermally plasticised synthetic material for the cable conduit (1) near the shaped region (11) of the shaping die (10) for the conduit bundle stabilisation profile (2) or the connecting webs (3), respectively,
wherein independent control and/or regulating devices (13, 14) are provided for the mass flow of the thermally plasticised synthetic material for the cable conduit (1) and for the partial mass flow for the formation of the conduit bundle stabilisation profile (2) and the connecting webs (3), respectively.

6. A device according to claim 5, wherein, for each cable conduit (1), a device (25) for centring the inner wall and the outer wall of the cable conduit (1) to be manufactured adjoins the inlet region of the die head (5), through which centring device the mass flow of the thermally plasticised synthetic material for the cable conduit (1) flows.

7. A device according to either one of claims 5 or 6, wherein, for each cable conduit, the die head (5) comprises a feeder device (15) having a feeder channel (16) for the thermally plasticised synthetic material for manufacturing the cable conduit (1), which feeder device is at an angle in relation to the die housing (8) with the central die mandrel (6), wherein a connecting channel (17) is branched off from the feeder channel (16) to the flow channel (12) for the partial mass flow for the formation of the conduit bundle stabilisation profile (2) or of the connecting webs (3), respectively.

8. A device according to claim 7, wherein the control and/or regulating devices (13; 14) for the mass flow of the thermally plasticised synthetic material for the cable conduit (1) and for the partial mass flows are disposed in the feeder device (15).

## Revendications

1. Procédé de fabrication d'un faisceau de tubes de guidage de câbles se composant d'une pluralité de tubes de guidage de câbles, placés les uns à côté des autres et réunis par des nervures de liaison (3) extrudées par extrusion d'un courant de matière total d'une matière plastique thermoplastifiée sortant d'une extrudeuse à l'aide d'un outil d'extrusion comprenant des canaux d'écoulement (7) formant les tubes de guidage de câbles ainsi que des fentes (22) formant les nervures de liaison, dans lequel les caractéristiques suivantes sont réalisées :
a) le courant de matière total est divisé en courants de matière qui sont associés aux canaux d'écoulement individuels (7) et qui sont amenés aux têtes d'outil (5).
B) A partir de chacun des courants de matière individuels, sont dérivés des courants de matière partiels qui sont amenés aux fentes (22) dans l'outil d'extrusion par l'intermédiaire de voies d'écoulement séparées,
les différents courants de matière individuels et les courants de matière partiels associés étant réunis dans la zone de sortie de l'outil d'extrusion.

2. Procédé selon la revendication 1, dans lequel des profilés de stabilisation de faisceaux de tubes (2) sont formés et, à partir des courants de matière, d'autres courants de matière partiels sont dérivés, qui sont amenés aux canaux profilés par l'intermédiaire d'autres canaux d'écoulement séparés (12), dans des évidements (11) associés dans l'outil d'extrusion pour la formation des profilés de stabilisation de tubes (2).

3. Procédé selon l'une des revendications 1 ou 2, les courants de matière et les courants de matière partiels étant commandés et/ou régulés indépendamment les uns des autres.

4. Procédé selon l'une des revendications 1 à 3, dans la forme de réalisation pour la fabrication d'un faisceau de tubes de guidage de câbles, dont les tubes de guidage de câbles (1) présentent des nervures de glissement qui s'étendent, sur la face de paroi interne du tube, de manière hélicoïdale, en alternance de manière hélicoïdale ou ondulée et qui sont réalisées par un outil interne (9, 19) entraîné en conséquence pour la formation de nervures de glissement, les courants de matière et les courants de matière partiels étant rassemblés à l'emplacement des outils internes (9, 19) formant les nervures de glissement.

5. Dispositif pour la mise en oeuvre du procédé selon l'une des revendications 1 à 4, - comprenant une tête d'outil (5) pouvant être raccordée à une extrudeuse, la combinaison des caractéristiques suivantes étant réalisées:
a) la tête de filière (5) comporte, pour chaque tube de guidage de câbles, un mandrin central (6) et une carcasse (8) entourant le mandrin (6) tout en formant un canal d'écoulement (7) pour le courant de matière de la matière plastique thermoplastifiée destinée au tube de guidage de câbles,
b) à l'extrémité de la tête d'outil (5), d'où sortent les tubes de guidage de câbles (1) munis des nervures de liaison (3) respectivement du profilé de stabilisation de faisceaux de tubes (2), sont prévus des outils de formage (10) qui présentent une sortie (11) pour le profilé de stabilisation de faisceaux de tubes (2) respectivement pour la constitution de la nervure de liaison (3),
c) dans la carcasse (8) de l'outil, pour chaque tube de guidage de câbles (1), est disposé un canal d'écoulement particulier (12) pour le courant de matière partiel en vue de la formation du profilé de stabilisation de faisceaux de tubes (2) respectivement des nervures de liaison (3), canal qui débouche à proximité de la sortie (11) de l'outil de formage (10) pour le profilé de stabilisation de faisceaux de tubes (2) respectivement la nervure de liaison (3) dans le canal d'écoulement (7) pour la matière plastique thermoplastifiée destinée au tube de guidage de câbles (1),
des dispositifs de commande et/ou de régulation autonomes (13, 14) étant prévus pour le courant de matière de la matière plastique thermoplastifiée destinée au tube de guidage de câbles (1) ainsi que pour le courant de matière partiel en vue de la formation des profilés de stabilisation de faisceaux de tubes (2) respectivement des nervures de liaison (3).

6. Dispositif selon la revendication 5, la zone d'entrée de la tête d'outil (5) étant raccordée, pour chaque tube de guidage de câbles (1), à un dispositif (25) qui sert au centrage de la paroi interne et de la paroi externe du tube de guidage de câbles (1) à fabriquer et qui est traversé par le courant de matière plastique thermoplastifiée destinée au tube de guidage de câbles (1).

7. Dispositif selon l'une des revendications 5 ou 6, la tête d'outil (5) présentant, pour chaque tube de guidage de câbles, un dispositif d'amenée (15) coudé avec le mandrin central (6) vis-à-vis de la carcasse d'outil (8) et équipé d'un canal d'amenée (16) de la matière plastique thermoplastifiée pour la fabrication du tube de guidage de câbles (1), un canal de raccordement (17) au canal d'écoulement (12) étant dérivé du canal d'amenée (16) pour le courant de matière partiel en vue de la formation du profilé de stabilisation de faisceaux de tubes (2) respectivement des nervures de liaison (3).

8. Dispositif selon la revendication 7, dans le dispositif d'amenée (15) étant disposés les dispositifs de commande et/ou de régulation (13 respectivement 14) pour le courant de matière plastique thermoplastifiée destinée au tube de guidage de câbles (1) ainsi que pour les courants de matière partiels.
